# EUROPÄISCHE PATENTSCHRIFT

(11) **EP 0 716 625 B1**
(45) Veröffentlichungstag und Bekanntmachung des Hinweises auf die Patenterteilung: **02.12.1998**
(21) Anmeldenummer: 95921825.6
(22) Anmeldetag: 03.06.1995
(51) Int. Cl.: B01D 65/02, D06B 5/26, B01D 11/02, D01D 5/24, D01F 1/08

(54) **VERFAHREN ZUR ENTFERNUNG VON LUMENFÜLLERN UND ANDEREN LÖSLICHEN RÜCKSTÄNDEN AUS HOHLFÄDEN**
METHOD OF REMOVING FILLING FLUID AND OTHER SOLUBLE RESIDUES FROM THE BORE CAVITY OF HOLLOW FIBRES
PROCEDE PERMETTANT D'EXTRAIRE DES CHARGES D'UN CANAL MEDULLAIRE ET D'AUTRES RESIDUS SOLUBLES DE FILAMENTS CREUX

(30) Priorität: 04.07.1994 DE 4423167
(43) Veröffentlichungstag der Anmeldung: 19.06.1996
(73) Patentinhaber: Akzo Nobel N.V., 6824 BM Arnhem (NL)
(72) Erfinder: BREIDOHR, Hans-Günter, D-42289 Wuppertal (DE); MARTIN, Manfred, D-42289 Wuppertal (DE); KRAUTWURST, Bernhard, D-91056 Erlangen (DE); KÖNIG, Martin, D-40225 Düsseldorf (DE)
(74) Vertreter: Fett, Günter
(86) Internationale Anmeldenummer: EP9502118
(87) Internationale Veröffentlichungsnummer: WO9601144

(56) Entgegenhaltungen:
- EP-A- 0 018 236
- EP-A- 0 616 838
- EP-A- 0 630 655
- DD-A- 219 804
- DD-A- 224 343
- DE-A- 1 948 190
- DE-A- 3 934 406

## Beschreibung

Die Erfindung betrifft die Entfernung eines Lumenfüllers und/oder anderer löslicher Rückstände aus Hohlfäden.

Die Herstellung von Hohlfäden, insbesondere von Hohlfadenmembranen, aus den verschiedensten organischen oder synthetischen Polymeren ist vielfach bekannt. Bei der Extrusion der zur Herstellung von Hohlfäden erforderlichen Spinnlösung wird zur Gewährleistung des Lumens (Innenhohlraum des Hohlfadens) in der Regel eine Flüssigkeit (Lumenfüller) in die aus einer Ringspinndüse ausgepreßte Spinnlösung extrudiert. Für den Lumenfüller kommen nur Flüssigkeiten infrage, die weder das Polymere des Hohlfadens verändern noch mit den zur Herstellung des Hohlfadens erforderlichen Mitteln reagieren.

So wird beispielsweise für die Herstellung von cellulosischen Hohlfadenmembranen Isopropylmyristat als Lumenfüller verwendet. Dieser Lumenfüller läßt sich zwar mit Fluorkohlenwasserstoffen (FCKW) aus der Membran wieder entfernen, hierbei entsteht jedoch das Problem, daß dann auch das Reinigungsmittel wieder vollständig, beispielsweise durch Spülen mit einem Gas, aus der Membran entfernt werden muß. Außerdem sollte die Verwendung von FCKW wegen der sehr negativen Umwelteinflüsse möglichst vermieden werden.

Auch für andere Polymere, wie beispielsweise Polyamide, Polyacrylnitril oder Polyethersulfon, sind jeweils spezifische Lumenfüller erforderlich, die sich nur mit spezifischen Lösemitteln aus der Membran entfernen lassen. Auch hier müssen häufig Lösemittel eingesetzt werden, die eine erhebliche Umweltbelastung darstellen und/oder nur mit großem Aufwand entfernt werden können.

Es sind bereits verschiedene Verfahren zur Entfernung von Lumenfüllern aus Hohlfäden bekannt geworden. Beispielsweise werden bei der Herstellung von Hohlfäden leichtflüchtige Lumenfüller verwendet, die durch Begasung unter Druck leicht wieder aus den Hohlfäden entfernt werden können. Zur Herstellung von cellulosischen Hohlfäden ist aber ein leichtflüchtiger Lumenfüller bisher nicht gefunden worden. Auch bei anderen Hohlfäden, bei denen höhersiedende Lumenfüller eingesetzt werden müssen, ist eine direkte Entfernung des Lumenfüllers durch ein Gas, gegebenenfalls unter Einwirkung von Wärme, nicht oder nur unter sehr hohem Zeitaufwand möglich.

Aus DD-A-224 343 ist eine Vorrichtung zur Entfernung von Lumenfüllern aus Hohlfäden bekannt geworden, in welcher Hohlfadenbündel radial in einer Zentrifuge angeordnet werden, um zunächst den größten Anteil an Lumenfüller auszuschleudern. Danach wird die Ablaufseite der Hohlfadenbündel geschlossen und die Hohlfadenbündel mit Lösemittel derart beflutet, daß sie vollständig in Lösemittel eingetaucht sind. Das Lumenfüller enthaltende Lösemittel wird dann ausgeschleudert (Grobreinigung). Danach wird eine Feinreinigung durchgeführt, indem ständig neues Lösemittel zugeführt und abgeschleudert wird. Anschließend wird das Lösemittel mit Hilfe eines Gases verdunstet, wobei die Zentrifuge weiter in Betrieb bleibt. Das beschriebene Arbeitsverfahren mit Hilfe der bekannten Vorrichtung erfordert erhebliche Mengen an Lösemittel und Reinigungsgas, so daß dieses Verfahren als unwirtschaftlich bezeichnet werden muß.

Weiterhin wird in DD-A-219 804 ein Verfahren zur Entfernung von Lumenfüllern aus Hohlfäden beschrieben, bei dem der Lumenfüller zunächst grob entfernt wird, die Bündel mit einem Spülmittel, welches für den Lumenfüller ein Lösemittel ist, in zwei Stufen über stirnseitige Beflutung gereinigt werden und anschließend das Lösemittel mit Hilfe eines Gases entfernt wird. Dieses Verfahren wird für aufgerollte Hohlfadenmatten angewandt. Auch hierbei werden enorme Mengen an Lösemittel und Gas verbraucht.

Die beiden letzten Verfahren müssen auch deshalb als unwirtschaftlich bezeichnet werden, weil ein erheblicher Energieaufwand erforderlich ist, den Lumenfüller, das Lösemittel und das Gas aus den aus der Zentrifuge austretenden erheblichen Lösemittelmengen bzw. Gasmengen wieder zurückzugewinnen. Das der vorliegenden Erfindung zugrundeliegende Problem besteht also darin, ein Verfahren zur Entfernung eines Lumenfüllers und/oder anderer löslicher Rückstände aus Hohlfäden, bei dem die Hohlfäden endlicher Länge zu Bündein zusammengefaßt werden, und der Lumenfüller zunächst grob durch Zentrifugieren entfernt wird, die Bündel mit einem Lösemittel durch stirnseitiges Zuführen von Spülmittel und Zentrifugieren gereinigt werden, und anschließend das Lösemittel mit Hilfe eines Gases entfernt wird, zur Verfügung zu stellen, bei dem die umweltschädlichen Einflüsse minimiert sind, und bei welchem ein wirtschaflicher Einsatz von Lösemittel und Gas möglich ist.

Erfindungsgemäß wird dieses Problem dadurch gelöst, daß die Reinigung mit Lösemittel durch stirnseitiges Besprühen der Hohlfadenbündel durchgeführt wird und das Besprühen in mindestens zwei Stufen erfolgt. Vorzugsweise erfolgt das Besprühen in mindestens drei Stufen, wobei die erste Stufe im Durchlauf und die Besprühung der weiteren Stufen im Kreislaufverfahren erfolgt. Es ist vorteilhaft, das Lumenfüller und/oder lösliche Rückstände enthaltende Lösemittel von jeder Stufe für sich zu sammeln, wobei dann das Lösemittel der ersten Stufe der Rückgewinnung zugeführt wird und die Lösungsmittel der weiteren Stufen zum Besprühen in einer niederen Stufe verwendet werden.

Im Sinne der vorliegenden Erfindung wird unter stirnseitigem Besprühen jegliche stirnseitige Aufgabe von Lösemittel bei gleichzeitigem Zentrifugieren verstanden, infolge welcher das Lösemittel aufgrund der Zentrifugalkraft das Bündel über den gesamten Querschnitt derart durchströmt, daß das Lösemittel ohne nennenswerte Behinderung sowohl außen an den Hohlfäden entlangströmt als auch innen durch die Hohlfäden hindurchströmt. Hierzu sind die Bündel in der Richtung angeordnet, in welcher Richtung die Zentrifugalkraft wirkt, nämlich derart, daß die Längsachse der Bündel zumindest überwiegend radial nach außen im Zentrifugenraum angeordnet sind.

Dadurch, daß bei einer weiteren Entfernung des Lumenfüllers das bereits Lumenfüller enthaltende Lösemittel einer vorherigen höheren Stufe wiederverwendet wird, lassen sich erhebliche Mengen an Lösemittel einsparen.

Das erfindungsgemäße Verfahren gelingt vorzüglich, wenn das Besprühen der Hohlfadenbündel in bis zu acht Stufen erfolgt, wobei nach der ersten Stufe Besprühungen im Kreislauf derart duchgeführt werden, daß das beaufschlagte Lösemittel nach dem Durchlauf durch die Bündel aufgefangen und den Bündeln wieder stirnseitig solange zugeführt wird, bis der Gehalt an Lumenfüller und/oder löslicher Rückstände im Lösungsmittel zumindest in etwa konstant bleibt. Insofern ist in jeder Stufe eine wirksame Kontrolle über den jeweils noch vorhandenen Restgehalt an Lumenfüller im Hohlfaden gegeben.

Um immer konstant niedrigen Gehalt an Lumenfüller im Hohlfaden, der deutlich unter dem noch zulässigen Gehalt liegt, zu gewährleisten, wird insbesondere ein Verfahren bevorzugt, bei dem auch die letzte Stufe im Kreislauf durchgeführt wird. Hierbei hat es sich besonders bewährt, wenn für letzte Stufe mit einem Spülmittel mit einem möglichst niedrigen Gehalt an Lumenfüller bzw. löslichen Rückständen z.B. höchstens 20 ppm. vorzugsweise höchstens 5 ppm. begonnen wird. Durch den Gehalt in der höchsten und letzten Stufe der stirnseitigen Besprühung läßt sich der Restgehalt an Lumenfüller im Hohlfaden genau festlegen.

Es ist vorteilhaft, die letzte Reinigungsstufe so zu fahren, daß die sich im Kreislauf einstellende konstante Konzentration an Lumenfüller bzw. löslichen Rückständen möglichst niedrig ist, da diese Konzentration auch ein Maß für die Reinheit der fertigen Membran ist. Es ist vorteilhaft, wenn diese Konzentration nicht höher als 300 - 400, vorzugsweise nicht höher als 250 bzw. 200 ppm ist. Entspricht die sich einstellende Konzentration nicht den gestellten Qualitätsansprüchen, so kann es erforderlich sein z.B. noch eine oder mehrere Besprühungsstufen nachzuschalten oder die Reinigungsmittelmenge pro Stufe zu erhöhen.

Es ist vorteilhaft, wenn man zwischen den einzelnen Besprühungsstufen nach Beendigung einer Reinigungsstufe das Zentrifugieren nach einer Zeit ohne Zuführen von Reinigungsmittel fortsetzt, um soviel wie möglich an Flüssigkeit abzuschleudern.

Bei dem erfindungsgemäßen Verfahren können aus dem in der ersten Stufe gesammelten, stark mit Lumenfüller angereicherten Lösemittel der Lumenfüller und das Lösemittel weitgehend wiedergewonnen werden und mit entsprechenden Reinheitsgraden wiederverwendet werden.

Das erfindungsgemäße Verfahren hat sich besonders bewährt, wenn für die einzelnen Stufen das 0,3 bis 10-fache, bevorzugt das 0,6 bis 5-fache, des Hohlfadenvolumens an Lösemittel eingesetzt wird. Dieses Volumen entspricht dem für vollständige Reinigung insgesamt durchgesetzte Spülmittelmenge.

Das erfindungsgemäße Verfahren wird anhand der nachfolgenden Figuren und Beispiele näher erläutert.

Es zeigen:
- Figur 1: die schematische Darstellung des erfindungsgemäßen Verfahrens mit 4 Besprühungsstufen
- Figur 2: der Querschnitt durch eine Zentrifuge
- Figur 3: die Draufsicht auf die Zentrifuge gemäß Figur 3 ohne Deckel
- Figur 4: einen Behälter für ein Hohlfadenbündel zum Einsatz in die Zentrifuge.

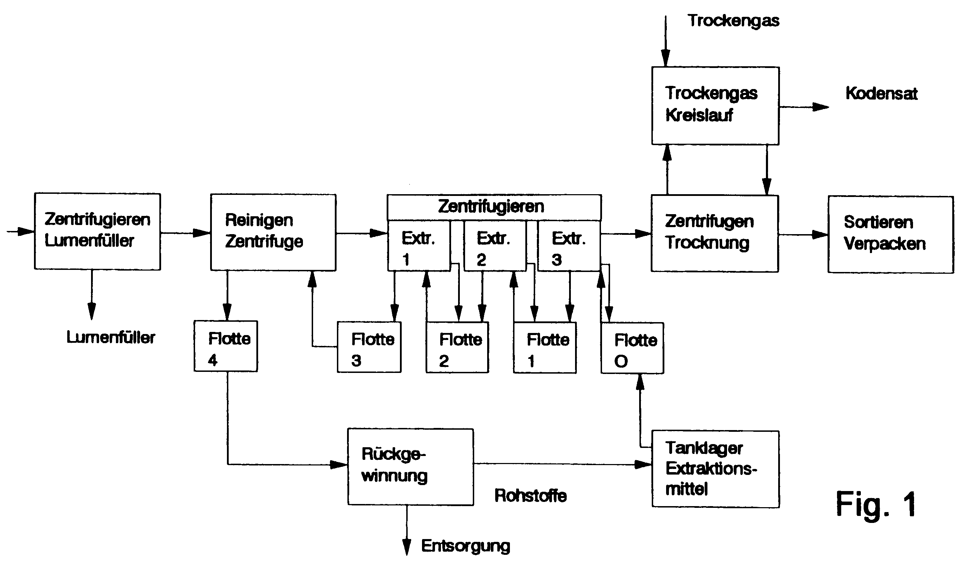

In Figur 1 ist schematisch der Ablauf des erfindungsgemäßen Verfahrens mit 4 Besprühungsstufen dargestellt. Zunächst werden die Hohlfadenbündel zentrifugiert (Zentrifugieren Lumenfüller), wobei der größte Teil des Lumenfüllers entfernt wird. Bei der ersten Reinigungsstufe (Reinigen Zentrifuge) wird aus Flotte 3 Lösemittel, welches bereits Lumenfüller enthält, stirnseitig auf die Hohlfadenbündel aufgesprüht und in die Flotte 4 abgegeben. Danach wird Lösemittel aus Flotte 2 zum weiteren Entfernen des Lumenfüllers zur Besprühung eingesetzt, und zwischen Extr. 1 und Flotte 2 im Kreislauf gefahren.

Nach Beendigung dieser zweiten Stufe wird das Lösemittel aus Flotte 2 in Flotte 3 abgelassen. In der dritten Stufe (Extr. 2) wird Lösemittel aus Flotte 1 eingesetzt, wobei zwischen Extr. 2 und Flotte 1 im Kreislauf gefahren wird. Nach Beendigung der dritten Stufe wird das Lösemittel aus Flotte 1 in Flotte 2 abgelassen. In der vierten Stufe wird aus Flotte 0, die zuvor vom Tanklager mit reinem oder wiedergewonnenen Lösemittel befüllt wurde, die Endreinigung durchgeführt, wobei hier im Kreislauf zwischen Extr. 3 und Flotte 0 gefahren wird. Um die gewünschte Endreinheit in den Hohlfäden zu erreichen, kann ggf. in dieser Stufe Lösemittel aus dem Tanklager nachdosiert werden oder mit frischen Lösungsmittel wieder erneut im Kreislauf gefahren werden, wenn der Gehalt an Lumenfüller im Lösemittel über einen vorgegebenen Wert, z.B. 400 ppm, ansteigt. Nach Abschließen der Endreinigung, der vierten Stufe wird das Lösemittel aus Flotte 0 in die Flotte 1 abgelassen. Flotte 0 kann für den nächsten Reingungsvorgang wieder befüllt werden. Nach der vierten Stufe wird nunmehr Trockengas stirnseitig auf die Bündel und durch diese hindurch geleitet, wobei auch hier im Kreislauf (zwischen Trockengas Kreislauf und Zentrifugen Trocknung) gefahren werden kann. Hierbei wird das Lösemittel verdunstet. Die gereinigten und getrockneten Bündel werden danach der Sortierung und Verpackung zugeführt. Aus dem Trockengas wird Lösemittel wieder herauskondensiert. Das Lösemittel aus Flotte 4 wird der Rückgewinnung zugeführt, wobei das wiedergewonnene Lösemittel wieder dem Tanklager Extraktionsmittel zugeführt wird. Der zurückgewonnene Lumenfüller kann wieder zur Herstellung neuer Hohlfäden verwendet werden. Ebenso wird der beim Zentrifugieren erhaltene Lumenfüller aufgearbeitet (nicht dargestellt) und kann danach wieder zur Herstellung von Hohlfäden eingesetzt werden.

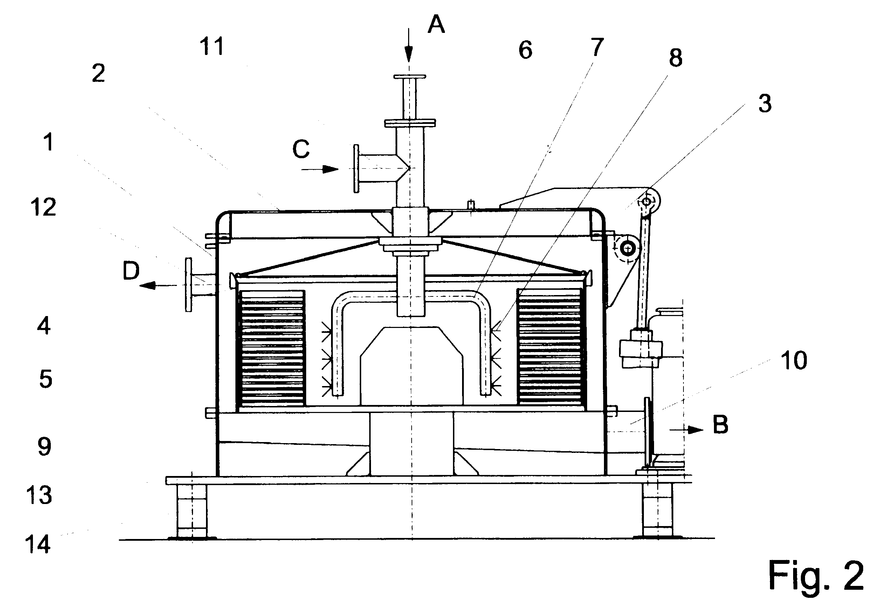

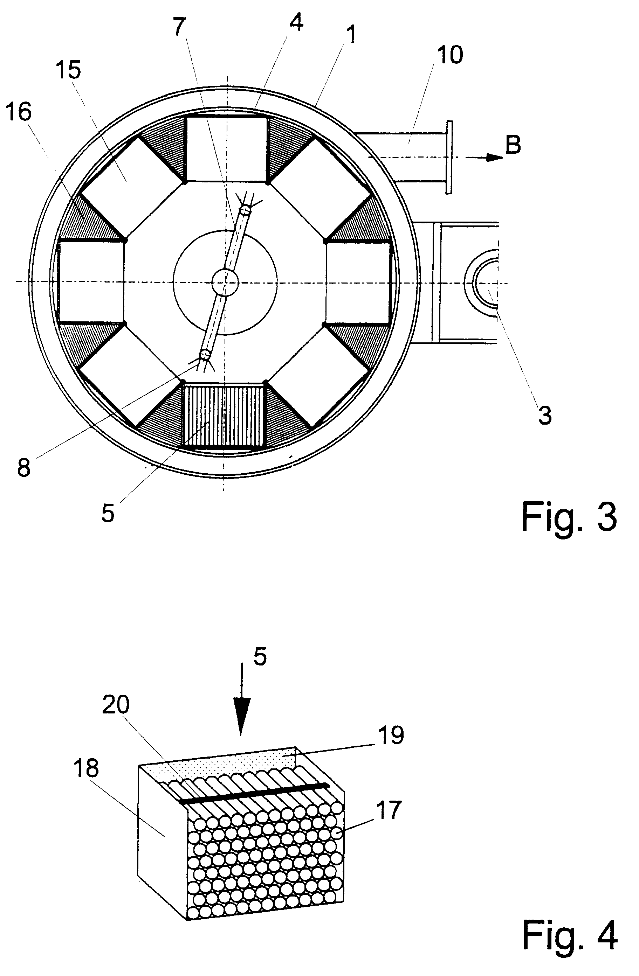

In Figur 2 ist eine zur Durchführung des erfindungsgemäßen Verfahrens geeignete Zentrifuge im Querschnitt, in Figur 3 in Draufsicht dargestellt. Mit 1 ist die Zentrifugenaußenwand und mit 2 der Zentrifugendeckel bezeichnet. Der Zentrifugendeckel kann mit den Mitteln 3 geöffnet oder geschlossen werden. Diese Mittel werden hier nicht näher erläutert. In den Zentrifugensiebkorb 4 sind Hohlfadenbündel 5 radial eingelegt, wie es besonders deutlich aus Figur 3 hervorgeht. Hierzu sind im Zentrifugensiebkorb 4 Plätze 15 vorgesehen, die über Abstandhalter 16 gesichert sind. Über den Flansch 6 kann in Richtung Pfeil A Lösemittel dem Verteiler 7 zugeführt werden, wobei Sprühdüsen 8 für eine gleichmäßige stirnseitige Besprühung der Hohlfadenbündel 5 sorgen. Durch die Zentrifugalkraft des mit hoher Drehzahl drehenden Zentrifugensiebkorbs wird das Lösemittel durch die Hohlfadenbündel, und zwar zwischen den Hohlfäden und durch die Lumen der Hohlfäden hindurch, nach außen gedrängt, wo es durch die Wand 1 der Zentrifuge aufgefangen und über den geneigten Zentrifugenboden 9 dem Stutzen 10 zugeleitet und in Richtung des Pfeiles B abgezogen wird. Bei der Trockenstufe (Verdunsten des zurückgebliebenen Lösemittels), wird das Trockengas über den Stutzen 11 in Richtung des Pfeiles C zugeleitet und über den Stutzen 12 in Richtung des Pfeiles D wieder abgeführt. Wie allgemein üblich, ist die Zentrifuge auf einem Boden 13 befestigt, welcher auf Schwingungsdämpfer 14 gelagert ist.

Zum Einsetzen der Hohlfadenbündel 5 eignen sich Behälter 18, wie sie in Figur 4 dargestellt sind. Der Behälter 18 besteht aus einem U-förmig gebogenen Blech, wobei die eine Seite des U mit einem Siebblech 19 verschlossen ist. Hohlfadenbündel 17 werden in den Uförmigen Behälter 18 derart eingelegt, daß deren eine Stirnseite bündig am Siebblech 19 anliegt. Nach Einlegen der Hohlfadenbündel wird diese im U-förmigen Behälter durch eine oder mehrere Stange(n) 20 gehalten.

### Beispiele:

13 000 Hohlfäden mit einer Länge von 178 mm werden zu Bündeln zusammengefaßt. Die Hohlfäden wiesen einen Lumen (Innendurchmesser) von 200 µm auf. In 8 U-förmige Behälter wurden jeweils 150 Hohlfadenbündel eingelegt und diese 8 Behälter derart in eine Zentrifuge eingesetzt, daß alle Hohlfäden und somit auch die Hohlfadenbündel in der Zentrifuge radial ausgerichtet waren. Die Gesamtlänge der in die Zentrifuge eingesetzten Hohlfäden betrug etwa 2800 km. Bei den Hohlfäden handelte es sich um cellulosischen Hohlfadenmembranen, die als Lumenfüller Isopropylmyristat (IPM) enthielten. Als Lösemittel wurde Isopropylalkohl (IPA) eingesetzt. Als Lösungsmittel können auch Lösungsmittelgemische wie IPA/Glycerin/Wasser eingesetzt werden.

Nach Einsetzen aller U-förmigen Behälter wurde die Zentrifuge geschlossen und der Lumenfüller abgeschleudert. Danach war in den Hohlfadenbündeln noch eine Menge von etwa 1270 g IPM enthalten. Anschließend wurde die Entfernung des restlichen Lumenfüllers durch Anwenden von verschiedenen Stufenzahlen durchgeführt, wobei die erste Stufe jeweils im Durchlauf und die weiteren Stufen im Kreislauf betrieben wurden. In der nachfolgenden Tabelle ist der Verbrauch an Lösemittel (IPA) angegeben, wenn die Reinigung in 1, 2, 3, 4 oder 5 Stufen vorgenommen wird.

Bei Verwendung von reinem Isopropylalkohol als Spülmittel ist es notwendig, den Weichmacher wie Glycerin wieder homogen von innen, und außen aufzutragen. Dies kann mit derselben Apparatur und durch Sprühen geschehen.

**Tabelle**

| | | | | | | | |
|---|---|---|---|---|---|---|---|
| | Rest IPM nach Abschleudern | g | 1270 | 1270 | 1270 | 1270 | 1270 |
| | Verbrauch IPA | kg | 2000 | 1033 | 295 | 177 | 147 |
| | IPM-Gehalt | ppm | 633 | 1224 | 4287 | 7131 | 8548 |
| Stufe 1 | Durchlauf IPM-Gehalt | ppm | 10 | 230 | 817 | 1356 | 1630 |
| Stufe 2 | Kreislauf IPM-Gehalt | ppm | | 10 | 226 | 741 | 1136 |
| Stufe 3 | Kreislauf IPM-Gehalt | ppm | | | 10 | 251 | 664 |
| Stufe 4 | Kreislauf IMP-Gehalt | ppm | | | | 10 | 221 |
| Stufe 5 | Kreislauf IPM-Gehalt | ppm | | | | | 10 |

Wie es sich aus der Tabelle anschaulich ergibt, wird der Lösemittelverbrauch überraschenderweise bei Anwendung des erfindungsgemäßen Verfahrens drastisch reduziert. Es sei darauf hingewiesen, daß im beschriebenen Stand der Technik (DD-A-224 343 bzw. DD-A-219 804) die Höhlfäden zunächst vollständig in Lösemittel getaucht werden und dann das Lösemittel abgelassen wird. Der Verbrauch an IPA liegt deutlich über dem in der Tabelle angegebenen 2-stufigen Verfahren, wenn man die gleiche Membranqualität einstellt. Nimmt man gleiche Mengen an Reinigungsmittel, liegt der Rest an Lumenfüller in den Hohlfäden deutlich höher.

Ein weiterer Gegenstand der Erfindung ist eine Vorrichtung zur Durchführung eines Verfahrens zum Entfernen eines Lumenfüllers und/oder anderer löslicher Rückstände aus Hohlfadenbündeln mittels Zentrifugieren und Spülen mit einem Lösungsmittel bzw. Reinigungsmittel wie sie u.a. detaillierter an Hand der Figuren 1, 2, 3 und 4 erläutert wird. Sie enthält neben den üblichen Mitteln wie u.a. für das Zuund Ableiten von Lumenfüller, und Spülmittel sowie zum Betreiben der Zentrifuge einen Zentrifugensiebkorb 4 mit Plätzen 15 zur radialen Einlage von Hohlfadenbündeln, Abstandshaltern 16, einen Verteiler 7 mit Sprühdüsen 8 zum stirnseitigen Besprühen der Hohlfadenbündel.

## Patentansprüche

1. Verfahren zur Entfernung eines Lumenfüllers und/oder anderer löslicher Rückstände aus Hohlfäden, bei dem die Hohlfäden endlicher Länge zu Bündeln zusammengefaßt werden, und der Lumenfüller zunächst grob durch Zentrifugieren entfernt wird, die Bündel durch Zuführen eines Lösemittels und Zentrifugieren gereinigt werden und anschließend das Lösemittel mit Hilfe eines Gases verdunstet wird, dadurch gekennzeichnet, daß die Reinigung mit Lösemittel durch stirnseitiges Besprühen bei gleichzeitigem Zentrifugieren der Hohlfadenbündel durchgeführt wird und das Besprühen in mindestens zwei Stufen erfolgt.

2. Verfahren nach Anspruch 1, dadurch gekennzeichnet, daß das Besprühen in mindestens drei Stufen erfolgt, wobei die erste Stufe im Durchlauf und die Besprühung der weiteren Stufen im Kreislaufverfahren erfolgt.

3. Verfahren nach Anspruch 2, dadurch gekennzeichnet, daß man die Lumenfüller und/oder lösliche Rückstände enthaltende Lösungsmittel von jeder Stufe für sich sammelt, wobei das Lösemittel der ersten Stufe der Rückgewinnung zugeführt wird und die Lösemittel der weiteren Stufen zum Besprühen in einer niederen Stufe verwendet werden.

4. Verfahren nach Anspruch 2 oder 3, dadurch gekennzeichnet, daß die Besprühung der Hohlfadenbündel in bis zu acht Stufen erfolgt, wobei die zweite und die folgenden Stufen im Kreislauf derart duchgeführt werden, daß das beaufschlagte Lösemittel nach dem Durchlauf durch die Bündel aufgefangen und den Bündeln wieder stirnseitig solange zugeführt wird, bis der Gehalt an Lumenfüller im Lösungsmittel in etwa konstant bleibt.

5. Verfahren nach einem der Ansprüche 2 bis 4, dadurch gekennzeichnet, daß die letzte Stufe im Kreislauf durchgeführt wird, bis eine konstante Konzentration von höchstens 400, vorzugsweise höchstens 250 bzw. 200 ppm an Lumenfüller und/oder löslicher Reste sich eingestellt hat.

6. Verfahren nach Anspruch 5, dadurch gekennzeichnet, daß man für die letzte Stufe frisches Lösemittel mit einem Gehalt von höchstens 20 ppm an Lumenfüller verwendet.

7. Verfahren nach Anspruch 6, dadurch gekennzeichnet, daß in der letzten Stufe Lösemittel mit einem Gehalt von höchstens 5 ppm an Lumenfüller verwendet werden.

8. Verfahren nach einem der Ansprüche 1 bis 7, dadurch gekennzeichnet, daß die Hohlfadenbündel in Gruppen in der Zentrifuge radial angeordnet werden.

9. Verfahren nach einem oder mehreren der Ansprüche 1 bis 8, dadurch gekennzeichnet, daß aus dem in der ersten Stufe gesammelten, stark mit Lumenfüller angereicherten Lösemittel der Lumenfüller und das Lösemittel wiedergewonnen wird.

10. Verfahren nach einem oder mehreren der Ansprüche 1 bis 9, dadurch gekennzeichnet, daß für die einzelnen Stufen das 0,3 bis 10-fache des Hohlfadenvolumens an Lösungsmittel eingesetzt wird.

11. Verfahren nach Anspruch 10, dadurch gekennzeichnet, daß für die einzelnen Stufen das 0,6 bis 5 fache des Hohlfadenvolumens an Lösungsmittel eingesetzt wird.

12. Vorrichtung zur Durchführung eines Verfahrens zum Entfernen eines Lumenfüllers und/oder anderer löslicher Rückstände aus Hohlfadenbündeln mittels Zentrifugieren und Spülen mit einem Lösungsmittel bzw. Reinigungsmittel bestehend aus Mitteln zum Zu- und Ableiten von Lumenfüller und Spülmittel sowie zum Betreiben der Zentrifuge und üblichem Zentrifugenzubehör, gekennzeichenet durch einen Zentrifugensiebkorb (4) mit Plätzen (15) zur radialen Einlage von Hohlfadenbündeln, Abstandshaltern (16) zur Sicherung der Plätze (15) und einen Verteiler (7) mit Sprühdüsen (8) zum stirnseitigen Besprühen der Hohlfadenbündel.

## Claims

1. Process for removal of a lumen filler and/or other soluble residues from hollow filaments, whereby the hollow filaments of finite length are combined into bundles and the lumen filler is first roughly removed by means of centrifuging, the bundles are cleaned by feeding a solvent and centrifuging, and the solvent is then evaporated by means of a gas, characterized in that the cleaning with solvent is carried out by end spraying together with centrifuging of the hollow filament bundles, and spraying is carried out in at least two steps.

2. Process according to Claim 1, characterized in that the spraying is carried out in at least three steps, whereby the first step is carried out in a pass-through mode and spraying in further steps is carried out in a recirculation process.

3. Process according to Claim 2, characterized in that solvents containing lumen fillers and/or soluble residues are collected from each step separately, whereby the solvent of the first step is fed to the recovery process and the solvents of the further steps are used for spraying in a lower-order step.

4. Process according to Claims 2 or 3, characterized in that the spraying of the hollow filament bundles takes place in up to eight steps, whereby the second and the subsequent steps are carried out under recirculation in such a way that the solvent applied is collected after the pass through the bundles and is redirected to the ends of the bundles until the content of lumen filler in the solvent remains approximately constant.

5. Process according to one of Claims 2 to 4, characterized in that the last step is carried out under recirculation until a constant concentration of at most 400, preferably at most 250 or 200 ppm of lumen filler or soluble residues, respectively, has been attained.

6. Process according to Claim 5, characterized in that in the last step fresh solvent containing at most 20 ppm of lumen filler is used.

7. Process according to Claim 6, characterized in that in the last step solvents containing at most 5 ppm of lumen filler are used.

8. Process according to one of Claims 1 to 7, characterized in that the hollow filament bundles are radially arranged in groups in the centrifuge.

9. Process according to one or more of Claims 1 to 8, characterized in that the lumen filler and solvent are recovered from the solvent collected in the first step, which has a high content of lumen filler.

10. Process according to one or more of Claims 1 to 9, characterized in that solvent 0.3 to 10 times the hollow filament volume is employed for the individual steps.

11. Process according to Claim 10, characterized in that solvent 0.6 to 5 times the hollow filament volume is employed for the individual steps.

12. Apparatus for carrying out a process for removal of a lumen filler and/or other soluble residues from hollow filament bundles by means of centrifuging and flushing with a solvent or cleaning agent, consisting of means for introducing and draining lumen filler and flushing agent as well as for operating the centrifuge, and common centrifuge accessories, characterized in that an extractor basket (4) with receptacles (15) for radial insertion of hollow filament bundles, spacers (16) for securing the receptables (15) and a distributor (7) with spraying nozzles (8) for end spraying of the hollow filament bundles.

## Revendications

1. Procédé permettant de débarrasser des fibres creuses de la substance médullaire et/ou d'autres résidus solubles, dans lequel des fibres creuses d'une longueur définie sont réunies par faisceaux et la substance médullaire est, dans un premier temps, éliminée grossièrement par centrifugation, les faisceaux sont ensuite nettoyés par passage d'un solvant et centrifugation, puis le solvant est évaporé à l'aide d'un gaz, lequel procédé est caractérisé par le fait que le nettoyage par un solvant se fait par aspersion frontale sous centrifugation des faisceaux de fibres, et par le fait que cette aspersion se fait en au moins deux étapes.

2. Procédé selon la revendication 1, caractérisé en ce que l'aspersion se fait en au moins trois étapes, la première étape consistant en un passage unique du solvant et l'aspersion des étapes ultérieures étant réalisée en boucle.

3. Procédé selon la revendication 2, caractérisé en ce que l'on recueille séparément les solvants contenant la substance médullaire et/ou les résidus solubles de chaque étape, le solvant de la première étape étant ensuite dirigé vers une étape de recyclage et les solvants des autres étapes étant utilisés pour l'aspersion dans une étape de rang inférieur.

4. Procédé selon la revendication 2 ou 3, caractérisé en ce que l'aspersion des faisceaux de fibres creuses se fait en jusqu'à huit étapes, la deuxième étape et les suivantes se faisant en boucle, à savoir par captage du solvant chargé ayant traversé les faisceaux et réintroduction frontale de celui-ci dans les faisceaux jusqu'à ce que la teneur en substance médullaire du solvant soit à peu près constante.

5. Procédé selon une des revendications 2 à 4, caractérisé en ce que la dernière étape est réalisée en boucle jusqu'à obtention d'une concentration constante en substance médullaire et/ou en résidus solubles, qui est au plus égale à 400 ppm, et de préférence au plus égale à 250 ou 200 ppm.

6. Procédé selon la revendication 5, caractérisé en ce que l'on utilise pour la dernière étape du solvant frais contenant au plus 20 ppm de substance médullaire.

7. Procédé selon la revendication 6, caractérisé en ce que l'on utilise pour la dernière étape du solvant contenant au plus 5 ppm de substance médullaire.

8. Procédé selon l'une quelconque des revendications 1 à 7, caractérisé en ce que les faisceaux de libres creuses sont disposés radialement, par groupes, dans la centrifugeuse.

9. Procédé selon une ou plusieurs des revendications 1 à 8, caractérisé en ce que l'on récupère la substance médullaire et le solvant à partir du solvant provenant de la première étape, fortement enrichi en substance médullaire.

10. Procédé selon une ou plusieurs des revendications 1 à 9, caractérisé en ce que l'on utilise pour les différentes étapes une quantité de solvant équivalente à 0,3 - 10 fois le volume de la fibre creuse.

11. Procédé selon la revendication 10, caractérisé en ce que l'on utilise pour les différentes étapes une quantité de solvant équivalente à 0,6 - 5 fois le volume de la fibre creuse.

12. Dispositif pour réaliser un procédé permettant de débarrasser des faisceaux de fibres creuses de la substance médullaire et/ou d'autres résidus solubles par centrifugation et rinçage avec un solvant ou un agent de nettoyage, lequel dispositif comprend des moyens d'arrivée et de sortie de la substance médullaire et de l'agent de rinçage, des moyens permettant de faire fonctionner une centrifugeuse ainsi que des accessoires de centrifugation habituels, caractérisé par un panier d'essorage perforé en fil (4) pour centrifugeuse comportant des emplacements (15) pour l'insertion radiale de faisceaux de fibres creuses. des dispositifs d'espacement (16) permettant de bloquer les emplacements (15), et par un distributeur (7) comportant des buses d'aspersion (8) pour l'aspersion frontale des faisceaux de fibres creuses.
